# EUROPÄISCHE PATENTSCHRIFT

(11) **EP 3 044 578 B1**
(45) Veröffentlichungstag und Bekanntmachung des Hinweises auf die Patenterteilung: **18.12.2019**
(21) Anmeldenummer: 14766673.9
(22) Anmeldetag: 08.09.2014
(51) Int. Cl.: G01N 29/024, G01N 29/22, G01F 23/296

(54) **FLÜSSIGKEITSTANK MIT ULTRASCHALLSENSOR UND UMLENKELEMENT**
LIQUID CONTAINER WITH ULTRASONIC SENSOR AND DEFLECTING ELEMENT
RECIPIENT DE LIQUIDE AVEC UN CAPTEUR ULTRASONORE ET UN ÉLÉMENT DÉFLECTEUR

(30) Priorität: 09.09.2013 DE 102013218001
(43) Veröffentlichungstag der Anmeldung: 20.07.2016
(73) Patentinhaber: Continental Automotive GmbH, 30165 Hannover (DE)
(72) Erfinder: ROTH, Manfred, 90613 Grosshabersdorf (DE)
(86) Internationale Anmeldenummer: PCT/EP2014/069076
(87) Internationale Veröffentlichungsnummer: WO 2015/032940

(56) Entgegenhaltungen:
- EP-A1- 0 619 489
- WO-A1-2007/118677
- US-A- 3 359 788

## Beschreibung

Die vorliegende Erfindung betrifft einen Ultraschallsensor zur Durchführung einer Laufzeitmessung in einer Flüssigkeit mit einem Ultraschallgeber und einem Umlenkelement aus Kunststoff, in das die vom Ultraschallgeber emittierten Ultraschallpulse geleitet und an einer Grenzfläche innerhalb des Umlenkelementes durch Reflexion umgelenkt werden.

Ein derartiger Ultraschallsensor ist bekannt. Er dient zur Messung der Konzentration und des Füllstandes einer Harnstofflösung in einem Tank, welcher in Kraftfahrzeugen mitgeführt wird, um die Harnstofflösung dem Abgas des Kraftfahrzeuges zuzuführen und auf diese Weise den NOₓ-Gehalt des Abgases zu reduzieren. Das Funktionsprinzip dieses Sensors beruht auf der Laufzeitmessung von reflektierten Ultraschallpulsen, wobei aus den gemessenen Laufzeiten die Füllhöhe der Harnstofflösung und deren Konzentration bestimmt werden.

Bei dem bekannten Sensor befindet sich der Ultraschallgeber unter der Bodenwand des Flüssigkeitstanks. Die abgegebenen Ultraschallpulse gelangen durch die Bodenwand in ein Umlenkelement, in dem die Pulse durch Reflexion an einer Grenzfläche um 90° abgelenkt werden. Die Umlenkung wird dabei durch ein metallisches Spiegelelement bewirkt, das auf dem sonst aus Kunststoff bestehenden Umlenkelement angeordnet ist. Bei dieser bekannten Ausführungsform wird daher die Grenzfläche, an der die Ultraschallpulse reflektiert werden, von der Übergangsfläche zwischen dem Kunststoffelement und dem Metallelement gebildet, wobei Letzteres vorzugsweise aus Edelstahl besteht. Dabei wird durch den großen akustischen Impedanzunterschied zwischen Kunststoff und Stahl ein hoher Reflexionsgrad des Ultraschalls erreicht.

Als Kunststoff findet vorzugsweise HDPE (Polyethylen hoher Dichte) Verwendung. Aufgrund der mechanischen Eigenschaften dieses Materiales und des großen Unterschiedes im Wärmeausdehnungsverhalten zwischen diesem Material und Stahl kann jedoch letztendlich keine formschlüssige Verbindung zwischen dem Kunststoff und dem Stahlelement über die Lebensdauer und thermische Alterung des Sensors erreicht werden. Vielmehr verschlechtern sich die Reflexionseigenschaften des Aufbaus im Laufe der Zeit, was zu einer Beeinträchtigung der Ultraschallsensorsignale führt. Dies führt wiederum zu einem Funktionsverlust des Sensors bezüglich Konzentrations- und/oder Füllstandsmessung.

Aus der WO 2007/118677 A1 ist eine Vorrichtung zur Messung des Füllstandes einer Flüssigkeit in einem Behälter mit einer Sendeeinrichtung, welche Ultraschall-Sendeimpulse aussendet, einer Empfangseinrichtung, welche die an einer Flüssigkeitsoberfläche reflektierten Echoimpulse empfängt, und einer Auswerteeinrichtung, welche die Laufzeiten der Ultraschall-Sendeimpulse und Echosignale auswertet, bekannt. In einem bestimmten Abstand zur Sende-/Empfangseinrichtung ist ein Reflektor angeordnet, der die Ultraschall-Sendeimpulse in Richtung zur Flüssigkeitsoberfläche reflektiert und die von der Flüssigkeitsoberfläche kommenden Echosignale in Richtung zur Empfangseinrichtung reflektiert.

Aus der EP 0 619 489 A1 ist ein Verfahren und eine Vorrichtung zur Erkennung eines Flusses in einem Druckgefäß eines Nuklear-Kraftwerks bekannt.

Die US 3 359 788 A offenbart eine Ultraschallmessung einer Lösungskonzentration.

Der Erfindung liegt die Aufgabe zugrunde, einen Flüssigkeitstank mit Ultraschallsensor der eingangs beschriebenen Art zu schaffen, der bei einer kostengünstigen Herstellung eine besonders gute Funktionsfähigkeit des Umlenkelementes über einen langen Zeitraum sicherstellt.

Diese Aufgabe wird erfindungsgemäß durch eine Vorrichtung gemäß Anspruch 1 gelöst. Erfindungsgemäß wird daher im Inneren des Umlenkelementes ein Impedanzsprung zwischen Kunststoff und Luft vorgesehen, welcher durch eine hermetisch dichte Lufttasche bzw. einen entsprechend hermetisch dichten Lufteinschluss im Kunststoffmaterial realisiert wird. Die Lufttasche ist dabei geometrisch so ausgebildet, dass sie die gewünschte Funktion als Reflektor erfüllt. Sie muss ferner hermetisch dicht gegenüber dem zu messenden Medium, beispielsweise Wasser, Harnstofflösung, weiteren Betriebsstoffen, sein. Ein entsprechender Eintritt dieser Substanzen in die Lufttasche wird zu einem Funktionsverlust des Umlenkelementes und damit des Sensors führen.

Das Umlenkelement aus Kunststoff ist erfindungsgemäß so ausgebildet, dass Druckschwankungen in der Lufttasche bzw. im Lufteinschluss aufgrund von Temperaturänderungen nicht zu einem Bruch des Elementes oder nicht zu nichttolerierbaren Formveränderungen der Lufttasche führen.

Vorzugsweise besitzt die Grenzfläche Kunststoff/Luft zur Umlenkung der Ultraschallpulse von einem vertikalen Schallpfad in einen horizontalen Schallpfad eine geneigte Lage. Hierbei dient das Umlenkelement beispielsweise zur Erzeugung eines horizontalen Schallpfades, der zur Laufzeitmessung in einer in einem Behälter befindlichen Flüssigkeit verwendet wird, wobei die Ultraschallpulse auf ihrem horizontalen Schallpfad auf Reflektoren treffen und von dort aus über das Umlenkelement auf den Ultraschallgeber zurückreflektiert werden, der auch als Empfänger dient.

Die erfindungsgemäß vorgesehene Lufttasche ist im Querschnitt vorzugsweise rechteckförmig ausgebildet, wobei die Grenzfläche Kunststoff/Luft von einer Längsseite des Rechteckes gebildet ist. Die Ultraschallimpulse werden daher an dieser Grenzfläche reflektiert.

Das Umlenkelement ist auf dem Boden eines Flüssigkeitstanks angeordnet. Erfindungsgemäß befinden sich der Ultraschallgeber an der Unterseite und das Umlenkelement gegenüberliegend auf der Oberseite der Bodenwand des Flüssigkeitstanks.

Ein derartiger Ultraschallsensor kann auch sowohl zur Konzentrationsmessung einer Flüssigkeit als auch zur Füllstandsmessung dieser Flüssigkeit eingesetzt werden. Hierbei werden beispielsweise Ultraschallpulse von dem an der Unterseite der Bodenwand des Tanks angeordneten Ultraschallgeber über das erfindungsgemäß ausgebildete Umlenkelement in einen horizontalen Schallpfad überführt, wobei ein Teil der Pulse auf Reflektoren trifft, die diesen Teil der Pulse zum Ultraschallgeber zurückreflektieren. Ein anderer Teil der Pulse des horizontalen Schallpfades trifft hierbei auf ein weiteres Umlenkelement, dass ebenfalls erfindungsgemäß ausgebildet sein kann, und wird von diesem Umlenkelement nach oben zur Oberfläche der Flüssigkeit umgelenkt und von dort wieder zurückreflektiert. Auch dieses zuletzt genannte Umlenkelement kann eine hermetisch dichte Lufttasche aufweisen, deren Wandung die Grenzfläche Kunststoff/Luft zur Reflexion der Ultraschallpulse bildet.

Die Funktionsweise der Umlenkelemente in Bezug auf die zurückreflektierten Ultraschallpulse ist entsprechend.

Bei einer speziellen Ausführungsform der Erfindung ist die Lufttasche durch Spritzgießen und anschließendes Verschweißen der Lufttasche hergestellt. Bei einer anderen Ausführungsform ist die Lufttasche durch Montage eines zusätzlichen Kunststoffteiles auf dem Umlenkelement hergestellt, wobei diese Montage durch Verschweißen erfolgen kann.

So können die Lufttaschen insbesondere beispielsweise beim Kunststoffspritzgussverfahren mittels beweglicher Schieber in das Formteil eingebracht werden. Die Öffnung der Tasche wird danach luftdicht verschweißt. Wie erwähnt, können die Lufttaschen auch durch Aufschweißen von Kunststoffelementen auf das Umlenkelement erzeugt werden. Mit dieser Methode ist eine bessere Formgebung der Lufttasche, beispielsweise durch Vermeidung von Einfallstellen am Kunststoff durch Schrumpf, möglich.

Vorzugsweise ist die an der Reflexion des Ultraschalls nicht beteiligte Rückwand der Lufttasche als bewegliche Membran ausgebildet. Hierdurch können Druckschwankungen aufgenommen werden, die beispielsweise durch Temperaturänderungen in der Lufttasche entstehen.

Die Erfindung wird nachfolgend anhand von Ausführungsbeispielen in Verbindung mit der Zeichnung im Einzelnen erläutert. Es zeigen:
- Figur 1: eine schematische Schnittdarstellung eines Umlenkelementes eines Ultraschallsensors des Standes der Technik;
- Figur 2: eine schematische Schnittdarstellung eines Umlenkelementes eines Ultraschallsensors gemäß der Erfindung; und
- Figur 3: eine schematische Schnittdarstellung einer weiteren Ausführungsform eines Umlenkelementes eines Ultraschallsensors gemäß der Erfindung.

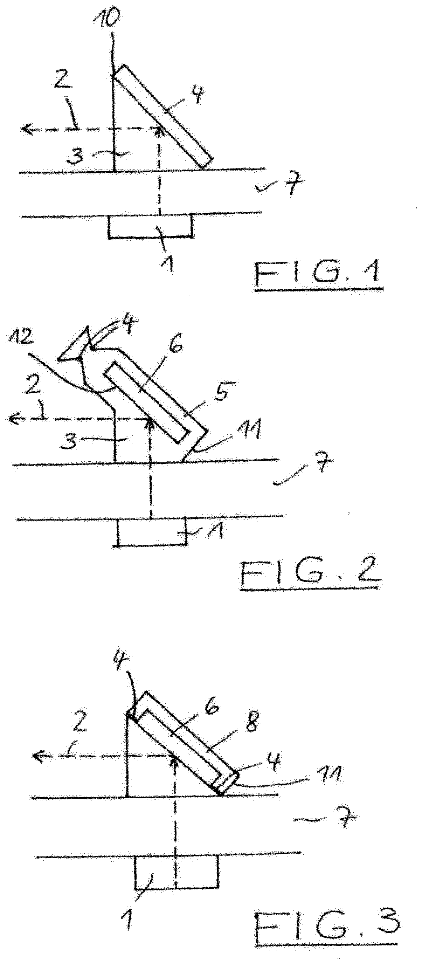

Von einem Ultrasensor des Standes der Technik sind in Figur 1 nur der Ultraschallgeber 1, der auch als Empfänger dient, sowie ein Schallumlenkelement 10 dargestellt. Die vom Ultraschallgeber 1 emittierten Schallpulse dringen durch die Bodenwand 7 eines Flüssigkeitstanks, in dem beispielsweise eine Harnstofflösung enthalten ist. Mit dem Ultraschallsensor soll die Konzentration der Harnstofflösung über eine Ultraschalllaufzeitmessung ermittelt werden. Dabei gelangen die innerhalb des Umlenkelementes 10 umgelenkten Schallpulse 2 in einem horizontal verlaufenden Schallpfad zu Reflektoren, werden von dort zurückreflektiert und gelangen wieder über das Umlenkelement 10 zum Schallgeber 1, der auch als Empfänger operiert.

Das hier dargestellte Umlenkelement 10 des Standes der Technik besitzt einen im Schnitt etwa dreieckförmiges Kunststoffformteil 3, das auf seiner Schrägseite ein metallisches Spiegelelement 4 aus Edelstahl trägt. Die Nachteile einer derartigen Ausführungsform wurden vorstehend erörtert.

Bei der in Figur 2 dargestellten Ausführungsform eines erfindungsgemäß ausgebildeten Umlenkelementes 11 ist in ein Kunststoffformteil 3 eine Lufttasche 6 integriert. Die Öffnung dieser Lufttasche 6 ist luftdicht verschweißt, wie durch die Schweißnähte 4 angedeutet. Die vom Kunststoffformteil 3 gebildete Rückwand 5 der Lufttasche 6 ist hierbei quasi als bewegliche Membran ausgeführt, um Druckschwankungen innerhalb der Lufttasche 6 ausgleichen zu können.

Bei dieser Ausführungsform gelangen die vom Schallgeber 1 emittierten Ultraschallpulse an die Grenzfläche 12 Kunststoff/Luft, die von einer Längswand der rechteckförmigen Lufttasche 6 gebildet wird. An dieser Grenzfläche 12 erfolgt eine Umlenkung der Pulse 2 durch Reflexion. Da hier keine Verbindungsfläche Kunststoff/Metall vorhanden ist, wie beim Stand der Technik, ist durch Alterung keine Veränderung des Umlenk- bzw. Reflexionsverhaltens dieser Fläche zu erwarten.

Figur 3 zeigt eine weitere Ausführungsform der Erfindung. Hierbei besteht das Umlenkelement 11 aus einem Kunststoffformteil 3, mit dem ein weiteres aufgesetztes Kunststoffformteil 8 verschweißt ist, wie durch die Schweißnähte 4 angedeutet. Das weitere Formteil weist einen Hohlraum auf, der eine entsprechende Lufttasche 6 bildet. An der Grenzfläche 12 zwischen der Lufttasche 6 und dem Formteil 3 findet die gewünschte Umlenkung bzw. Reflexion der vom Schallgeber 1 emittierten Schallpulse 2 statt.

## Patentansprüche

1. Flüssigkeitstank mit Ultraschallsensor zur Durchführung einer Laufzeitmessung in einer im Flüssigkeitstank befindlichen Flüssigkeit mit einem Ultraschallgeber und einem Umlenkelement aus Kunststoff, in das die vom Ultraschallgeber emittierten Ultraschallpulse geleitet und an einer Grenzfläche innerhalb des Umlenkelementes durch Reflexion umgelenkt werden, **dadurch gekennzeichnet dass** im Inneren des Umlenkelementes (11) eine hermetisch dichte Lufttasche (6) angeordnet ist, deren Wandung die Grenzfläche (12) Kunststoff/ Luft zur Reflexion der Ultraschallpulse (2) bildet, und dass der Ultraschallgeber (1) an der Unterseite und das Umlenkelement (11) gegenüberliegend auf der Oberseite der Bodenwand (7) des Flüssigkeitstanks angeordnet ist.

2. Flüssigkeitstank nach Anspruch 1, **dadurch gekennzeichnet, dass** die Grenzfläche (12) Kunststoff/Luft zur Umlenkung der Ultraschallpulse (2) von einem vertikalen Schallpfad in einen horizontalen Schallpfad eine geneigte Lage besitzt.

3. Flüssigkeitstank nach Anspruch 1 oder 2, **dadurch gekennzeichnet, dass** die Lufttasche (6) im Querschnitt rechteckförmig ausgebildet ist, wobei die Grenzfläche (12) Kunststoff/Luft von einer Längsseite des Rechteckes gebildet ist.

4. Flüssigkeitstank nach einem der vorangehenden Ansprüche, **dadurch gekennzeichnet, dass** das Umlenkelement (11) auf dem Boden (7) eines Flüssigkeitstanks angeordnet ist.

5. Flüssigkeitstank nach einem der vorangehenden Ansprüche, **dadurch gekennzeichnet, dass** die Lufttasche (6) durch Spritzgießen und anschließendes Verschweißen der Lufttasche (6) hergestellt ist.

6. Flüssigkeitstank nach einem der Ansprüche 1 bis 4, **dadurch gekennzeichnet, dass** die Lufttasche (6) durch Montage eines zusätzlichen Kunststoffteiles (8) auf dem Umlenkelement (3) hergestellt ist.

7. Flüssigkeitstank nach einem der vorangehenden Ansprüche, **dadurch gekennzeichnet, dass** die an der Reflexion des Ultraschalls nicht beteiligte Rückwand (5) der Lufttasche (6) als bewegliche Membran ausgebildet ist.

## Claims

1. Liquid tank having an ultrasound sensor for performing a propagation time measurement in a liquid located in the liquid tank, having an ultrasound transmitter and having a diverting element composed of plastic, into which diverting element the ultrasound pulses emitted by the ultrasound transmitter are conducted, said ultrasound pulses being diverted by reflection on a boundary surface within the diverting element, **characterized in that**, in the interior of the diverting element (11), there is arranged a hermetically sealed air pocket (6), the wall of which forms the plastics/air boundary surface (12) for the reflection of the ultrasound pulses (2) and **in that** the ultrasound transmitter (1) is arranged on the underside of the base wall (7) of the liquid tank, and the diverting element (11) is arranged opposite, on the top side of the base wall (7) of the liquid tank.

2. Liquid tank according to Claim 1, **characterized in that** the plastics/air boundary surface (12) has an inclined attitude for the diversion of the ultrasound pulses (2) from a vertical sound path into a horizontal sound path.

3. Liquid tank according to Claim 1 or 2, **characterized in that** the air pocket (6) is of rectangular form in cross section, wherein the plastics/air boundary surface (12) is formed by a long side of the rectangle.

4. Liquid tank according to one of the preceding claims, **characterized in that** the diverting element (11) is arranged on the base (7) of a liquid tank.

5. Liquid tank according to one of the preceding claims, **characterized in that** the air pocket (6) is produced by injection molding and subsequent welding of the air pocket (6).

6. Liquid tank according to one of Claims 1 to 4, **characterized in that** the air pocket (6) is produced by the mounting of an additional plastics part (8) on the diverting element (3).

7. Liquid tank according to one of the preceding claims, **characterized in that** the rear wall (5), which does not participate in the reflection of the ultrasound, of the air pocket (6) is in the form of a movable diaphragm.

## Revendications

1. Récipient de liquide avec un capteur ultrasonore pour l'exécution d'une mesure de temps de parcours dans un liquide se trouvant dans le récipient de liquide avec un émetteur d'ultrasons et un déflecteur en matière plastique, dans lequel les impulsions ultrasonores émises par l'émetteur d'ultrasons sont conduites et sont déviées par réflexion sur une surface limite à l'intérieur du déflecteur, **caractérisé en ce qu'**une poche d'air (6) hermétiquement étanche est disposée à l'intérieur du déflecteur (11), dont la paroi forme la surface limite (12) matière plastique/air pour la réflexion des impulsions ultrasonores (2), et **en ce que** l'émetteur d'ultrasons (1) est disposé sur le côté inférieur et le déflecteur (11) est disposé en face sur le côté supérieur de la paroi de fond (7) du récipient de liquide.

2. Récipient de liquide selon la revendication 1, **caractérisé en ce que** la surface limite (12) matière plastique/air présente une position inclinée pour la déviation des impulsions ultrasonores (2) d'un chemin acoustique vertical à un chemin acoustique horizontal.

3. Récipient de liquide selon une revendication 1 ou 2, **caractérisé en ce que** la poche d'air (6) est de forme rectangulaire en section transversale, dans lequel la surface limite (12) matière plastique/air est formée par un long côté du rectangle.

4. Récipient de liquide selon l'une quelconque des revendications précédentes, **caractérisé en ce que** le déflecteur (11) est disposé sur le fond (7) d'un récipient de liquide.

5. Récipient de liquide selon l'une quelconque des revendications précédentes, **caractérisé en ce que** la poche d'air (6) est produite par moulage par injection et soudage ultérieur de la poche d'air (6).

6. Récipient de liquide selon l'une quelconque des revendications 1 à 4, **caractérisé en ce que** la poche d'air (6) est produite par montage d'une pièce de matière plastique supplémentaire (8) sur le déflecteur (3).

7. Récipient de liquide selon l'une quelconque des revendications précédentes, **caractérisé en ce que** la paroi arrière (5) de la poche d'air (6) ne participant pas à la réflexion des ultrasons est formée par une membrane mobile.
